# EUROPÄISCHE PATENTSCHRIFT

(11) **EP 1 921 294 B1**
(45) Veröffentlichungstag und Bekanntmachung des Hinweises auf die Patenterteilung: **14.03.2018**
(21) Anmeldenummer: 07020116.5
(22) Anmeldetag: 15.10.2007
(51) Int. Cl.: F02D 11/10, F02D 41/30, F02D 41/14

(54) **Verfahren zur Betriebsartenumschaltung für eine Brennkraftmaschine**
Method for switching the operation mode of a combustion machine
Procédé de changement de type de fonctionnement pour un moteur à combustion interne

(30) Priorität: 08.11.2006 DE 102006053254
(43) Veröffentlichungstag der Anmeldung: 14.05.2008
(73) Patentinhaber: IAV GmbH Ingenieurgesellschaft Auto und Verkehr, 10587 Berlin (DE)
(72) Erfinder: Böhme, Thomas, Dr-Ing., 29293 Wesendorf (DE); Linka, Stefan, Dr.-Ing., 44793 Bochum (DE); Magnor, Olaf, Dr.-Ing., 38104 Braunschweig (DE); Schnaubelt, Michael, 38518 Gifhorn (DE); Schultalbers, Matthias, 38536 Meinersen (DE)

(56) Entgegenhaltungen:
- EP-A2- 0 992 668
- EP-A2- 1 643 104
- WO-A1-2006/038601

## Beschreibung

Die Erfindung betrifft ein Verfahren zur Umschaltung von Betriebsarten einer Brennkraftmaschine, bei welchem zwischen einem Verfahren homogener Kompressionszündung und einem konventionellen Brennverfahren umgeschalten wird.

Allgemein vorbekannt sind Verbrennungsverfahren, bei welchen ein homogen vorgemischtes Kraftstoff-Luftgemisch durch Selbstzündung entzündet wird. Diese Brennverfahren werden häufig mit HCCI (Homogeneous Charge Compression Ignition) oder CAI (Controlled Auto Ignition) bezeichnet. Um eine homogene Verbrennung zu erzielen, muss ein ausreichend hohes Energieniveau im Zylinder vorliegen. Dies kann beispielsweise durch einen hohen Verdichtungsdruck und/oder durch eine ausreichende Menge heißen Restgases hervorgerufen werden. Die Steuerung der die Selbstzündung beeinflussenden Parameter, wie Verdichtung, Abgasrückführrate, Einspritzzeitpunkt, Kraftstoffverteilung, Luftfüllung etc. ist sehr komplex. Vorbekannt ist beispielsweise aus der DE 102 37 328 B4 ein Verfahren zur Steuerung des Verbrennungsablaufes, bei welchem ein HCCI-Verbrennungsprozess mittels interner Zustandsgrößen modelliert wird und die Ausgangsgrößen des modellierten Verbrennungsprozesses zum Regeln der die Selbstzündung beeinflussenden Stellgrößen genutzt werden. Einstellgrößen können hierbei beispielsweise die Ansteuerung von Ein- bzw. Auslassventilen der Brennkraftmaschine sein, welche hinsichtlich ihres Hubes und ihrer Ansteuerzeit variabel gesteuert werden können. Mittels variabler Ansteuerzeiten lassen sich sowohl die Kompression als auch die AGR-Rate bei interner Abgasrückführung beeinflussen. Weitere Einflussparameter können die Stellung eines AGR-Ventils, ein einstellbares Verdichtungsverhältnis oder die Einspritzparameter sein. Die Betriebsart homogener Selbstzündung ist dabei nicht in allen Betriebspunkten darstellbar, vielmehr sind diese meist auf den Bereich der Teillast begrenzt. Die Verfahrensführung ist insbesondere in den Randbereichen und bei dynamischen Betriebsübergängen schwierig. Das Brennverfahren findet bisher praktisch nur in begrenzten Kennfeldbereichen bei nahezu stationärem Betrieb Anwendung. In weiten Betriebsbereichen wird die Verbrennungskraftmaschine konventionell betrieben. Hier kommt insbesondere der Umschaltstrategie Bedeutung zu, um die Kennfeldbereiche, in welchen eine homogene Selbstzündung verwendet werden kann, aufzuweiten.
Vorbekannt ist aus der DE 101 61 551 B4, Bereiche homogener Kompressionszündung und konventioneller Verbrennung in einem Kennfeld über Drehzahl und effektiven Mitteldruck als Lastäquivalent darzustellen und auf Basis dieser Größen Selbstzündungs- und Fremdzündungsbereiche festzulegen. Die Bereiche sind hierbei für statische Betriebspunkte definiert. Es ist weiterhin aus der WO 2006/038601 A1 bekannt, neben dem Erreichen einer Bereichsgrenze auch die Änderungsrate der Solleinspritzmenge als Kriterium zum Umschalten zwischen einer vorgemischten und einer diffusiven Selbstzündung vorzusehen Die homogene Kompressionszündung findet sowohl beim Betrieb mit Otto- als auch mit Dieselkraftstoff Anwendung. Sie bezeichnet ein Brennverfahren, bei welchem gleichzeitig an allen Punkten im Brennraum eine exotherme Reaktion des Kraftstoff-Luftgemisches stattfindet. Für den Betrieb mit Ottokraftstoff findet sich unter anderen Bezeichnungen häufig die Bezeichnung CAI für den Betrieb mit homogener Kompressionszündung. Homogene, kompressionsgezündete Verfahren für Dieselkraftstoff werden üblicherweise mit HCCI bezeichnet. Die bisher bekannten sogenannten konventionellen Brennverfahren unterscheiden sich hinsichtlich der Verbrennung des Kraftstoff-Luftgemisches. Bei konventionellen Brennverfahren erfolgt die Ausbreitung einer Flammfront oder, wie vom Dieselmotor bekannt, eine Diffusionsverbrennung mit Einspritzung in ein bereits brennendes Kraftstoff-Luftgemisch. Für Ottokraftstoff sind zusätzlich zu dieser Unterscheidung bezüglich der Verbrennungsart die konventionellen Brennverfahren fremdgezündet.
Aufgabe der Erfindung ist es, eine Umschaltstrategie zwischen homogener, kompressionsgezündeter Verbrennung und einem konventionellen Brennverfahren anzugeben, welche insbesondere im dynamischen Betrieb die Kennfeldbereiche homogener Verbrennung ausnutzt und gleichfalls die Umschalthäufigkeit begrenzt. Die Aufgabe wird erfindungsgemäß durch ein Verfahren mit den Merkmalen des Hauptanspruches gelöst. Vorteilhafte Ausgestaltungen ergeben sich aus den Unteransprüchen.
Die Betriebsartenumschaltung erfolgt zwischen einem Brennverfahren homogener, kompressionsgezündeter Verbrennung und einer Betriebsart konventioneller Verbrennung derart, dass die jeweiligen Betriebsbereiche wenigstens über die Kenngrößen Drehzahl und Last definiert sind, wobei erfindungsgemäß vorteilhaft eine Umschaltung zwischen den Betriebsbereichen in Abhängigkeit vom aktuellen Betriebspunkt und von quantifizierbaren Merkmalen der Bahnkurve sowie des Abstandes des aktuellen Betriebspunktes von der Bereichsgrenze des Betriebsbereiches erfolgt. Die Umschaltung wird damit nicht starr an der Bereichsgrenze vorgenommen, sondern an den dynamischen Betrieb der Brennkraftmaschine im Fahrzeug angepasst. Auf Basis der Merkmale der Bahnkurve im Drehzahl-Last-Kennfeld und des aktuellen Abstandes von der Bereichsgrenze wird der Umschaltzeitpunkt definiert.

Die Merkmale der Bahnkurve des Betriebszustandes ergeben sich aus der Historie der Bewegung des Betriebspunktes. Es werden die aktuelle Bewegungsrichtung und/oder die Geschwindigkeit der Annäherung des Betriebspunktes an die Bereichsgrenze ermittelt. Weitere Merkmale können der kürzeste Abstand zur Bereichsgrenze oder der Schnittpunkt der Bahnkurve mit der Bereichsgrenze sein. Der dynamische Verlauf des Betriebspunktes wird damit hinsichtlich seiner Annäherung an den neuen Betriebsbereich bewertet und es kann ein vorausschauendes Umschalten bzw. ein Einstellen der Umschaltbedingungen erfolgen. Hinsichtlich der zeitlichen Koordination der Umschaltprozesse sind insbesondere die Bewegungsrichtung und die Bewegungsgeschwindigkeit des aktuellen Betriebspunktes vorteilhafte Merkmale. Aus der Bahnkurve kann ein Schnittpunkt mit dem Betriebsbereich und aus der Bewegungsgeschwindigkeit dessen zeitliches Eintreten vorhergesagt und damit der Beginn der Betriebsartenumschaltung vorhergesagt werden.

Erfindungsgemäß vorteilhaft kann ein Umschalten in einen neuen Betriebsbereich von einer prädizierten Verweildauer im neuen Betriebsbereich abhängen. Auf Basis der Bahnkurvenparameter wird eine an den Verfahrensgrenzen bemessene Verweildauer im neuen Betriebsbereich vorhergesagt. Wird der Betriebsbereich nur gestreift und erfolgt aufgrund dessen Erstreckung im Drehzahl-Last-Kennfeld lediglich ein "Streifen" des neuen Betriebsbereiches, also ein Durchtritt mit einer kurzen Verweildauer, so erfolgt keine Umschaltung in den neuen Bereich. Die minimale Verweildauer ist dabei ein applizierbarer Parameter, wobei diese oberhalb der für eine drehmomentenneutrale Umschaltung benötigten Zeit liegt.

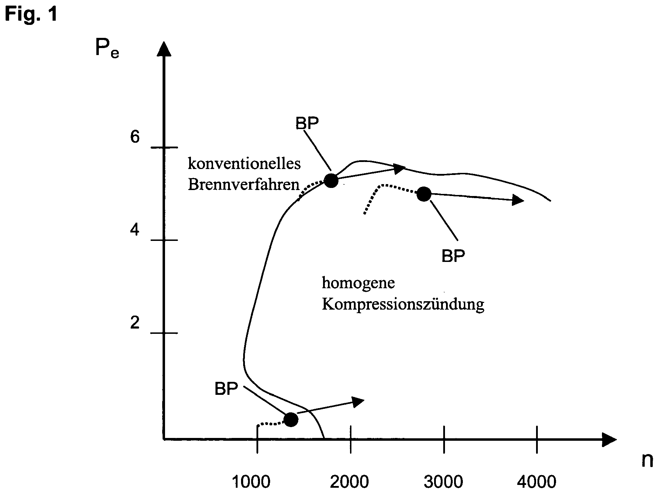

In einer vorteilhaften Ausführung der Erfindung erfolgt eine Umschaltung von der Betriebsart homogener Kompressionszündung in eine konventionelle Betriebsart unmittelbar an der Grenze des Betriebsbereiches, da die drehmomentenneutrale Umschaltung zeitlich nahezu schritthaltend erfolgt, während für die Umschaltung in den Bereich homogener Kompressionszündung für eine drehmomentenneutrale Umschaltung eine Synchronisation der Drosselklappe und des Zündwinkels notwendig ist, wobei durch die Gaslaufzeiten eine zeitliche Verzögerung auftritt.
Die Initialisierung der Betriebsartenumschaltung in den Betriebsbereich homogener Kompressionszündung erfolgt dabei vor dem Erreichen der Bereichsgrenze, wobei die Parameter der Verweildauer und der Abstand zum Betriebsbereich sowie die Annäherungsgeschwindigkeit zur Ermittlung des Umschaltpunktes genutzt werden. Durch die Vorhersage des Umschaltzeitpunktes kann ein Vollzug der Umschaltung an der Bereichsgrenze sichergestellt werden, wodurch eine effektive Nutzung des Bereiches homogener Kompressionszündung mit dem dieser Betriebsart eigenen Vorteil hinsichtlich des Kraftstoffverbrauches und der entstehenden Abgase möglich ist.
Nachfolgend wird die Erfindung anhand einer beispielhaften Ausgestaltung näher erläutert. Die Figur 1 zeigt ein Diagramm, in welchem über der Drehzahl n der effektive Mitteldruck Pₑ aufgetragen ist. Die durchgezogene Linie bezeichnet die Bereichsgrenze, innerhalb welcher die Brennkraftmaschine mit homogener Kompressionszündung betrieben werden kann. Außerhalb der Bereichsgrenze wird die Brennkraftmaschine mit einem konventionellen Brennverfahren, z.B. bei der Verwendung von Ottokraftstoff mit einem Schichtladeverfahren und Fremdzündung betrieben. Die Bereichsgrenze ist hierbei beispielhaft aufgezeigt. Diese kann durch Prüfstandsergebnisse ermittelt werden. Der Bereich homogener Kompressionszündung ist insbesondere im Bereich geringer Drehzahlen und bei hohen Lasten begrenzt. Im dynamischen Betrieb der Brennkraftmaschine wird dabei der Bereich, in dem ein homogenes, kompressionsgezündetes Brennverfahren zur Anwendung kommen kann, immer wieder durchfahren. Es ist daher für die Ausnutzung des Kennfeldbereiches enorm wichtig, eine geeignete Umschaltstrategie zu verfolgen. Erfindungsgemäß erfolgt eine Umschaltanforderung auf Basis der Auswertung des aktuellen Betriebspunktes BP und von dessen Abstand zur Bereichsgrenze. Hier werden zur Beurteilung, ob und wann eine Umschaltung erfolgt, Merkmale der Bahnkurve des Betriebspunktes über die letzten zurückliegenden Verbrennungszyklen - strichliert dargestellt - berücksichtigt. Aus dem Verlauf der Bahnkurve lässt sich eine aktuelle Richtung der Bewegung des Betriebspunktes vorhersagen sowie dessen Bewegungsgeschwindigkeit ermitteln. An drei beispielhaft dargestellten Betriebspunkten wird das Verfahren dargestellt. Der BP1 zeigt ein Beispiel für eine Umschaltung in den Betriebsbereich homogener Kompressionszündung. Ausgehend von der aktuellen Position des Betriebspunktes im Kennfeld wird dessen Bewegungsrichtung und der aktuelle Abstand zur Bereichsgrenze bewertet. Als Maße zur Bewertung dienen der absolute Abstand des Betriebspunktes zur Bereichsgrenze sowie der Abstand zum Schnittpunkt mit der Bereichsgrenze. Auf Basis der aktuellen Bewegungsgeschwindigkeit des Betriebspunktes im Kennfeld kann ein Eintritt in den Bereich homogener Kompressionszündung vorhergesagt werden und die Umschaltung anhand der Eintrittszeit vorhergesagt und vorbereitet werden. Die Freigabe des Betriebes homogener Kompressionszündung hängt weiterhin davon ab, ob der geforderte Drehmomentenwunsch in der Betriebsart realisierbar ist. Liegt eine Freigabe des Betriebsbereiches homogener Kompressionszündung vor, so ist für eine Umschaltung eine komplexe Steuerung der einströmenden Gasmassen, des Zündwinkels und der Einspritzung notwendig, um eine drehmomentenneutrale Umschaltung in den Betriebsbereich homogener Selbstzündung zu ermöglichen. Wird beispielsweise zur Steuerung der Gaswechselventile eine hinsichtlich ihres Hubes umschaltbare Nockenwelle verwendet, welche für das Rücksaugen von Abgasen einen Zusatzhub für das Auslassventil in der Ansaugphase zur Restgassteuerung aufweist, so erfolgt für eine drehmomentenneutrale Umschaltung erst ein stärkeres Öffnen der Drosselklappe, wobei der Drehmomentenaufbau in der konventionellen Betriebsart durch eine Zündwinkelrücknahme begrenzt wird. Beim Umschalten der Nockenhubkurven kann entdrosselt werden und der Lambdawert wird durch die Kraftstoffeinspritzung auf einen für den homogen kompressionsgezündeten Betriebsbereich günstigen Lambdawert zwischen etwa 1,1 und etwa 1,4 eingestellt. Die Zündung kann auf extrem frühe Werte eingestellt werden, so dass das Gemisch nicht entflammt wird, sondern lediglich eine Energieanreicherung erfolgt, welche den Zeitpunkt der Selbstzündung des Gemisches im Zylinder geringfügig beeinflussen kann. Die Umschaltung bedarf dabei aufgrund der Gaslaufzeiten für eine drehmomentenneutrale Umschaltung eine definierte Zeitdauer, so dass auf Basis der Kenntnis der Bahnkurve eine Umschaltung vor der Bereichsgrenze erfolgen kann. Aus der Bewegungsrichtung und der Bewegungsgeschwindigkeit des Betriebspunktes im Kennfeld ist dieser Zeitpunkt vorhersagbar. Bei der Rückschaltung aus dem Bereich der homogenen Selbstzündung kann hingegen an der Bereichsgrenze direkt umgeschalten werden, da als erstes der notwendige Eingriff über die schnellen Pfade, wie Einspritzung und Zündwinkel, erfolgt und das aus dem Bereich homogener Kompressionszündung kommende Drehmoment mit dem konventionellen Brennverfahren darstellbar ist. Hier ist jedoch zu beachten, dass keine verfrühte Umschaltung erfolgt, so dass ein häufiger Betriebsartenwechsel an den Bereichsgrenzen vermieden wird. Hier zeigt beispielhaft der Betriebspunkt BP2 ein Verbleiben im Bereich homogener Kompressionszündung. Da aus der Bahnkurve eine Tendenz zum Verbleiben im Bereich homogener Kompressionszündung abgeleitet werden kann, erfolgt keine Umschaltung, obwohl der Betriebspunkt dicht an der Bereichsgrenze liegt. Diese Betrachtung ist ebenfalls beispielhaft nur für den umgekehrten Fall der Herkunft aus dem konventionellen Brennverfahren zu beachten. Betriebspunkt BP3 zeigt ein Beispiel, in welchem der Betriebsbereich homogener Kompressionszündung lediglich gestreift wird. Auf Basis der Merkmale der Bahnkurve ist abschätzbar, dass der Bereich homogener Kompressionszündung lediglich gestreift wird. Auf Basis der Bewegungsgeschwindigkeit und der Richtung der Bewegung ist eine Verweildauer im Bereich homogener Kompressionszündung abschätzbar, so dass bei einer geringen Verweildauer keine Umschaltung erfolgt. Ändert sich die vorhergesagte Bewegungsrichtung des Betriebspunktes, verlangsamt sich also dessen Bewegung oder dreht sich die Bewegungsrichtung in den Bereich homogener Kompressionszündung, so verlängert sich die geschätzte Verweildauer und es erfolgt eine Umschaltung in den Bereich homogener Kompressionszündung.

## Patentansprüche

1. Verfahren zur Umschaltung zwischen einer Betriebsart homogener, kompressionsgezündeter Verbrennung und einer Betriebsart konventioneller Verbrennung einer Brennkraftmaschine, wobei Betriebsbereiche der Betriebsarten wenigstens über Drehzahl und Last definiert sind, wobei eine Umschaltung zwischen den Betriebsbereichen in Abhängigkeit vom aktuellen Betriebspunkt und von der aktuellen Bewegungsrichtung des Betriebspunktes erfolgt, **dadurch gekennzeichnet, dass** die Umschaltung weiterhin in Abhängigkeit der Geschwindigkeit der Annäherung des Betriebspunktes an eine Bereichsgrenze sowie in Abhängigkeit des Abstandes des aktuellen Betriebspunktes von der Bereichsgrenze erfolgt, wobei innerhalb der Bereichsgrenze die Brennkraftmaschine mit homogener Kompressionszündung und außerhalb der Bereichsgrenze die Brennkraftmaschine mit dem konventionellen Brennverfahren betrieben wird, wobei ein Verlassen des aktuellen Betriebsbereiches oder ein Eintreten in einen neuen Betriebsbereich auf Basis der Bewegungsrichtung und Bewegungsgeschwindigkeit des aktuellen Betriebspunktes hinsichtlich seines zeitlichen Eintretens vorhergesagt wird.

2. Verfahren nach Patentanspruch **1,**
**dadurch gekennzeichnet, dass**
ein Umschalten in einen neuen Betriebsbereich von einer prädizierten Verweildauer im Betriebsbereich abhängt, wobei die Verweildauer auf Basis der Bewegungsgeschwindigkeit und der Richtung der Bewegung im Bereich homogener Kompressionszündung abgeschätzt wird.

3. Verfahren nach Patentanspruch 2,
**dadurch gekennzeichnet, dass**
bei Erreichen der Betriebsbereichsgrenze eine Umschaltung in den Betriebsbereich homogener Verbrennung dann nicht erfolgt, wenn die prädizierte Verweildauer kleiner einem festlegbaren Grenzwert ist, welcher größer als die Zeitdauer der zur drehmomentenneutralen Umschaltung benötigten Zeitdauer ist.

## Claims

1. Method for switching between an operating mode of homogeneous, compression-fired combustion and an operating mode of conventional combustion of an internal combustion engine, wherein operating ranges of the types of operation are defined by at least the rotation speed and load, wherein switching between the operational ranges takes place as a function of the current operating time and of the current direction of movement of the operating point, **characterized in that** the switching also takes place as a function of the speed of the approach of the operating point to a range limit as well as as a function of the distance of the current operating point from the range limit, wherein the internal combustion engine is operated with homogeneous compression ignition within the range limit, and the internal combustion engine is operated with the conventional combustion method outside the range limit, wherein exiting from the current operating range or entry into a new operating range if it is predicted on the basis of the direction of movement and of the movement speed of the current operating point with respect to its occurrence in time.

2. Method according to Patent Claim 1,
**characterized in that**
switching into a operating range depends on the predicted time spent in the operating range, wherein the time spent is estimated on the basis of the movement speed and the direction of the movement in the range of homogeneous compression ignition.

3. Method according to Patent Claim 2, **characterized in that**
when the operating range limit is reached, switching into the operating range of homogeneous combustion does not take place if the predicted time spent is shorter than a predefinable limiting value which is longer than the duration of the time required for torque-neutral switching.

## Revendications

1. Procédé pour commuter entre un type de fonctionnement de combustion homogène, à allumage par compression, et un type de fonctionnement de combustion conventionnelle d'un moteur à combustion interne, des plages de fonctionnement des types de fonctionnement étant définies au moins par le biais de la vitesse de rotation et de la charge, une commutation entre les plages de fonctionnement s'effectuant en fonction du point de fonctionnement actuel et du sens de déplacement actuel du point de fonctionnement, **caractérisé en ce que** la commutation s'effectue en outre en fonction de la vitesse de rapprochement du point de fonctionnement d'une limite de la plage ainsi qu'en fonction de la distance du point de fonctionnement actuel à la limite de la plage, à l'intérieur de la limite de la plage, le moteur à combustion interne fonctionnant avec un allumage par compression homogène et à l'extérieur de la limite de la plage, le moteur à combustion interne fonctionnant avec le procédé de combustion conventionnel, une sortie de la plage de fonctionnement actuelle ou une entrée dans une nouvelle plage de fonctionnement étant prédite en termes de son entrée temporelle sur la base du sens de déplacement et de la vitesse de déplacement du point de fonctionnement actuel.

2. Procédé selon la revendication 1,
**caractérisé en ce**
**qu'**une commutation dans une nouvelle plage de fonctionnement dépend d'une durée de séjour prédite dans la plage de fonctionnement, la durée de séjour étant évaluée sur la base de la vitesse de déplacement et du sens de déplacement dans la plage d'allumage par compression homogène.

3. Procédé selon la revendication 2,
**caractérisé en ce que**
lorsque la limite de plage de fonctionnement est atteinte, une commutation dans la plage de fonctionnement de combustion homogène ne se produit pas si la durée de séjour prédite est inférieure à une valeur limite définissable qui est supérieure à la durée nécessaire pour une commutation neutre en termes de couple.
